# EUROPEAN PATENT APPLICATION

(11) **EP 4 768 360 A1**
(43) Date of publication of application: **01.07.2026**
(21) Application number: 25226687.9
(22) Date of filing: 23.12.2025
(51) Int. Cl.: B61L 23/04, B61D 15/12, G06F 18/00, G06N 20/00, F17D 5/02

(54) **A METHOD AND SYSTEM FOR AUTONOMOUS INSPECTION FOR ELONGATED INFRASTRUCTURE ELEMENTS**

(30) Priority: 30.12.2024 IN 202421104340
(71) Applicant: Premier Seals India Private Ltd, Pune, Maharashtra 411019 (IN)
(72) Inventor: Shinde, Shreyas, 411019 Maharashtra (IN); Gupta, Sarthak, 411019 Maharashtra (IN); Awari, Kunal, 411019 Maharashtra (IN); Biju, Arjun, 411019 Maharashtra (IN); Panikar, Rohit, 411019 Maharashtra (IN); Jhawar, Chirag, 411019 Maharashtra (IN); Bishnoi, Mohit, 411019 Maharashtra (IN)
(74) Representative: Metida

(57) **Abstract**

The present disclosure relates to a method (300) and system (100) for autonomous inspection of elongated infrastructure elements. The system (100) comprises an autonomous mobile robot (AMR) (500, 600) configured to traverse along the elongated infrastructure elements. The AMR includes a processor (202) and a memory (204) communicatively coupled with the processor (202) and the memory (204) stores executable instructions including one or more pretrained machine learning models. One or more sensors (210) mounted on the AMR (500, 600) are configured to capture geometric, surface, profile, surrounding, or combined data corresponding to the infrastructure elements. An inspection unit (212) analyzes the captured data to detect anomalies, such as structural defects, surface irregularities, or other deviations. A reporting unit (214) generates a report on the detected anomalies, enabling real-time monitoring, predictive maintenance, and decision-making. The system (100) provides automated, accurate, and efficient inspection, enhancing safety and reliability of elongated infrastructure elements.

## Description

The present application claims priority from the Indian provisional patent application, having application number 202421104340, filed on 30th December 2024, incorporated herein by reference.

### TECHNICAL FIELD

The present disclosure relates to the field of railway infrastructure monitoring and automated inspection systems. More particularly, the present invention relates to a method and a system for autonomous inspection of elongated infrastructure elements using advanced sensor technologies, introducing innovative methodologies for detecting track and traction anomalies and defects, aiming to enhance the accuracy and efficiency of automated track maintenance and safety monitoring.

### BACKGROUND

This section is intended to introduce the reader to various aspects of art, which may be related to various aspects of the present disclosure that are described or claimed below.

The Railways, with its extensive network spanning thousands of kilometres across a wide variety of terrains and experiencing diverse weather conditions, faces substantial challenges in ensuring the integrity and safety of its railway tracks. As one of the largest and busiest rail networks in the world, the Railway is tasked with maintaining a vast and complex infrastructure that supports the daily transportation of millions of passengers and goods. With such a high volume of operations, ensuring that the tracks remain in optimal condition is critical for preventing accidents, ensuring passenger safety, and minimizing disruptions to services. However, the sheer scale and complexity of the railway network create numerous obstacles to effective track inspection.

Maintaining track safety in such a large network is a highly challenging endeavour due to a variety of factors, including the sheer volume of trains in operation, the differing environmental conditions across various regions, and the diverse terrain that the tracks traverse. The Railways network spans from the arid deserts to the humid coastal regions, and from the mountainous terrains to the flat plains. This diversity in terrain and climate means that the tracks experience different types of stresses, such as expansion and contraction due to temperature fluctuations, wear and tear from heavy train traffic, and erosion due to heavy rainfall or snow. These factors can lead to a variety of track issues, including misalignment, surface wear, and degradation of track components.

The existing manual inspection methods, which are still widely used in the Railways network, pose a significant hurdle to maintaining track integrity. These methods are highly labour-intensive and require a large number of personnel to physically inspect and assess the condition of the tracks. Inspectors typically walk along the tracks, visually scanning for visible signs of defects, cracks, misalignment, and other potential issues. While this process has been the standard for decades, it is inherently time-consuming and prone to human error. Inspectors may miss subtle defects or inconsistencies, especially if they are fatigued, working under poor weather conditions, or facing time constraints. Furthermore, the time taken for manual inspections delays the identification of critical issues, which can compromise the safety and efficiency of train operations.

The limitations of manual inspections are further exacerbated when trying to detect more subtle or hidden defects. Track misalignment, small gap variations between rails, internal cracks, and other issues may not be immediately visible to the naked eye, yet these defects can have a significant impact on rail integrity and safety. Traditional methods also struggle to detect issues in real-time, meaning that the identification of track anomalies often happens only after an accident or significant disruption occurs. This reactive approach to maintenance not only increases the risk of accidents but also leads to unnecessary downtime and maintenance delays. As the volume of traffic on the network continues to rise, relying on manual inspection methods has become increasingly unsustainable and inefficient.

In addition to the limitations of manual inspections, the infrastructure itself poses challenges to effective monitoring. The railway network consists of numerous track sections, bridges, tunnels, and other complex structures, many of which are difficult to access. Inspectors may have limited access to certain areas, particularly in remote or hazardous locations, which makes it difficult to perform thorough inspections. Moreover, the existing inspection equipment, such as handheld devices and basic track measurement tools, lacks the precision and efficiency required for modern railway operations. These devices may not be capable of detecting small cracks, wear patterns, or subtle misalignments, further contributing to the overall risk of track degradation going undetected.

As the need for more efficient, accurate, and timely track inspections becomes more urgent, it is clear that traditional methods are insufficient to meet the growing demands of railway safety and maintenance. With an increasing volume of train traffic, more demanding operational schedules, and the need for real-time data to make informed decisions, a modern, automated solution is necessary. A comprehensive track inspection system, capable of identifying a wide range of track anomalies with high accuracy, real-time data processing, and seamless integration into existing railway management systems, would be a game-changer for the railway industry.

In recent years, more advanced technologies have emerged, attempting to address some of these challenges by offering a self-moving motion platform that autonomously navigates railway tracks. It uses high-precision sensors to detect a wide range of track issues, such as track geometry problems, rail wear, and surface defects like cracks. Real-time data analysis provides immediate feedback for maintenance teams, improving the speed and accuracy of defect detection. However, while this system excels in automation, it may be limited in scalability and adaptability to different terrain types or weather conditions.

Similarly, an array of sensors to assess key track parameters such as alignment and surface conditions. The system analyzes data in real time, detecting anomalies that could pose risks to rail integrity. Its integration with existing railway management platforms allows for streamlined maintenance scheduling and resource allocation. Although it significantly enhances safety by reducing manual intervention and improving data-driven decision-making, the system's ability to perform at high speeds and under diverse environmental conditions remains a challenge.

Yet another solution provides the solution that combines high-resolution imaging, machine vision cameras, 2D laser scanners, and Inertial Measurement Unit (IMU) sensors, allowing for high-speed inspection at speeds up to 100 km/h (60 mph). This system addresses various track geometry parameters, including gauge, cross-level, and alignment, while also detecting surface defects such as cracks, chips, and collapsed areas. The system's integration with AI and machine learning algorithms ensures precise defect detection and classification. Despite its impressive capabilities, the system's reliance on high-end computing units and specialized hardware limits its deployment across all railway lines, especially in less accessible regions.

Another promising solution offers a comprehensive Rail Track Monitoring System designed to enhance both safety and maintenance efficiency. This system integrates multiple data streams, including high-resolution digital imaging, to assess critical track components like rail tops, joint bars, fasteners, and sleepers. It provides a detailed analysis of track conditions and helps identify defect locations, thereby minimizing the need for physical site visits. While this solution offers a flexible deployment option and integrates well with broader track inspection systems, its ability to operate at high speeds or under dynamic conditions remains a potential limitation.

While each of these systems provides valuable advancements over traditional methods, they all face similar challenges. These include limitations in speed, scalability, adaptability to different operational conditions, and the high costs associated with their deployment and maintenance. Moreover, the lack of seamless integration with existing railway management platforms or real-time, actionable feedback further hinders their effectiveness. As a result, there is a critical need for a more unified, automated solution that combines the strengths of these technologies while overcoming their individual limitations. The solution must be capable of conducting real-time, high-speed, and accurate track inspections across a wide variety of terrains, weather conditions, and operational contexts, ensuring the safety, reliability, and efficiency of modern railway systems.

Thus, there is an increasing demand for a next-generation solution that integrates high-precision sensors, machine learning algorithms, and automated robotics to create a comprehensive railway track inspection system capable of detecting a wide range of anomalies in real-time. Such a system would not only improve safety and efficiency but also enhance the overall performance of railway networks, allowing for proactive maintenance, reduced operational costs, and better resource management.

In view of the above, addressing the aforementioned technical challenges requires an improved method and a system for automated railway track inspection.

Further limitations and disadvantages of conventional and traditional approaches will become apparent to one of skill in the art, through comparison of described systems with some aspects of the present disclosure, as set forth in the remainder of the present application and with reference to the drawings.

### SUMMARY

According to embodiments illustrated herein, a system and a method for an autonomous inspection system for elongated infrastructure elements is disclosed. Further, the system may comprise an autonomous mobile robot (AMR) configured to traverse along the elongated infrastructure elements. Further, the AMR may comprise a memory and a processor. Further, the processor may be configured to execute programmed instructions stored in the memory. Further, the one or more executable instructions may comprise one or more pretrained machine learning (ML) models. Further, the AMR may comprise one or more sensors, mounted on the AMR, configured to capture at least one of geometric data, surface data, profile data, surrounding data, or a combination thereof, corresponding to the elongated infrastructure elements. Further, the AMR may comprise an inspection unit coupled with the processor, configured to inspect information captured by the one or more sensors, to detect one or more anomalies. Further, the AMR may comprise a reporting unit coupled with the processor, configured to generate a report on the one or more anomalies corresponding to the elongated infrastructure elements.

### BRIEF DESCRIPTION OF DRAWINGS

FIG. 1 is a block diagram that illustrates a system for autonomous inspection of elongated infrastructure elements, in accordance with an embodiment of present subject matter.
FIG. 2 is a block diagram that illustrates various components of an autonomous mobile robot (104) configured for performing steps for autonomous inspection of elongated infrastructure elements, in accordance with an embodiment of the present subject matter.
FIG. 3 is a flowchart that illustrates a method autonomous inspection of elongated infrastructure elements, in accordance with an embodiment of the present subject matter; and
FIGS. 4 and 5 illustrates a structure of autonomous inspection of elongated infrastructure elements, in accordance with an embodiment of the present subject matter.
FIG. 6 illustrates a flexible AMR (600) structure for autonomous inspection of elongated infrastructure elements, in accordance with an embodiment of the present subject matter.

### DETAILED DESCRIPTION

The terminology sensor, sensors, one or more sensors, plurality of sensors has a same meaning and used alternatively throughout the specification.

The terminology robot, AMR robot, one or more robots has the same meaning and used alternatively throughout the specification.

The terminology track, tracks, railway track has the same meaning and used alternatively throughout the specification.

An objective of the present disclosure is to provide a high-precision, AI-powered railway track inspection system that ensures accurate monitoring of railway track geometry and surface conditions, enabling early detection of defects.

Another objective of the present disclosure is to develop a system capable of real-time data processing for immediate defect detection, with location and time-tagged reporting for precise localization and efficient maintenance actions.

Yet another objective of the present disclosure is to create an autonomous railway track inspection solution that minimizes downtime and disruptions to train operations while inspecting large track sections.

Yet another objective of the present disclosure is to enhance the safety of railway operations by providing a system that detects and reports both track geometry issues (gauge, cross-level, alignment, curvature) and surface defects (Corrugations, squats, skid spots, indentations, rail wear), traction issues (OHE height, stagger, damage) with high precision.

Yet another objective of the present disclosure is to enable predictive maintenance capabilities through the integration of AI and machine learning models, allowing for early identification of potential hazards and reducing repair costs.

Yet another objective of the present disclosure is to ensure the scalability and adaptability of the railway inspection system, allowing for modular upgrades and integration with future technologies for continuous improvement and expansion of capabilities.

Yet another objective of the present disclosure is to reduce operational costs and labour dependency by automating the inspection process, preventing costly repairs through proactive maintenance and early defect detection.

Yet another objective of the present disclosure is to ensure the durability and reliability of the inspection system by providing robust protection for key components such as sensors, cameras, mobility mechanisms, and communication systems against environmental factors like dust, moisture, and vibrations.

Yet another objective of the present disclosure is to develop a comprehensive solution for railway track management that combines high-tech features such as real-time inspection, advanced defect detection, AI-driven insights, and automated reporting, while maintaining operational excellence and regulatory compliance.

Yet another objective of the present disclosure is to ensure the security and integrity of the system by protecting AI models, real-time processing software, and communication protocols through encryption, secure backups, and robust cybersecurity measures, safeguarding against unauthorized access and data breaches.

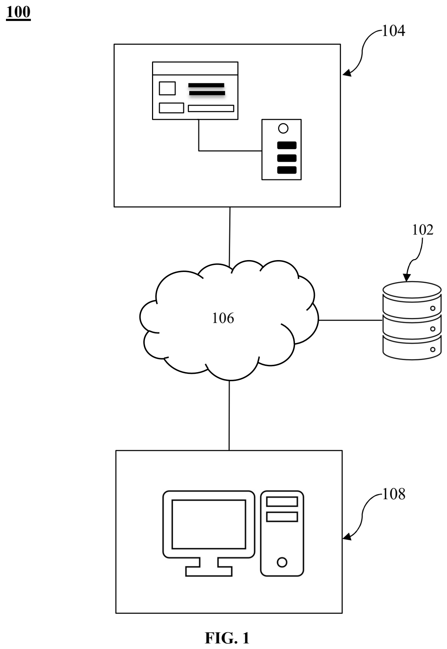

FIG. 1 is a block diagram that illustrates a system (100) for autonomous inspection system for elongated infrastructure elements, in accordance with an embodiment of present subject matter. The system (100) typically includes a database server (102), an autonomous mobile robot (AMR) (104), a communication network (106), and one or more portable devices (108). The database server (102), the AMR (104), and the one or more portable devices (108) are typically communicatively coupled with each other via the communication network (106). In an embodiment, the AMR (104) may communicate with the database server (102), and the one or more portable devices (108) using one or more protocols such as, but not limited to, Hypertext Transfer Protocol (HTTP), Transmission Control Protocol/Internet Protocol (TCP/IP), Wireless Application Protocol (WAP), RF mesh, Bluetooth Low Energy (BLE), and the like, to communicate with one another.

In one embodiment, the database server (102) is designed to store a plurality of data, which include information related to one or more sensors involved in processing the sensor data. These data may contain data from track inspections, including the environmental details, the track geometry information, and the detected surface defects. Additionally, the database server (102) stores intermediate data, such as results from machine learning-based anomaly detection, and logs of task execution, including retries, task statuses, and related metadata.

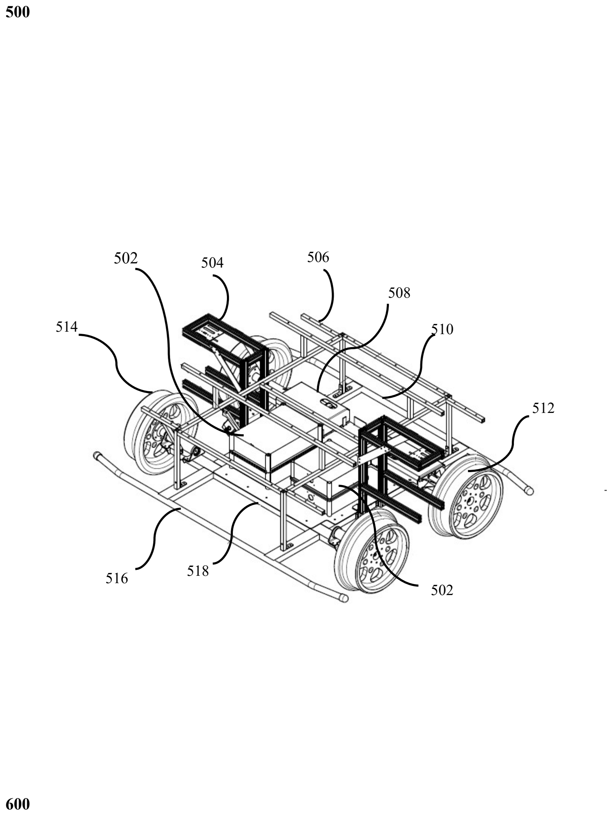

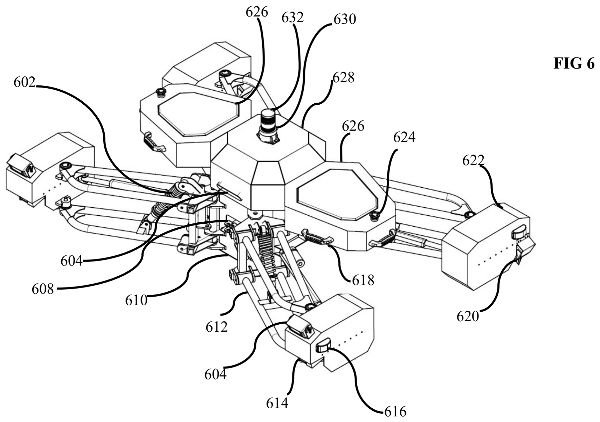

In an exemplary embodiment, the system (100) may comprise the AMR configured to evaluate and monitor railway track conditions. The process may begin with the AMR (104) being placed on a track, where the system (100) may perform checks for both mobility and inspection equipment. Once readiness is confirmed, the system (100) may require physical confirmation from a user via a wireless HMI or device to ensure safe operation. After confirmation, the system (100) may begin capturing rail visuals and inspection data through one or more cameras coupled with the AMR (104). The mobility software layer may support this process through three key modules: a self-assessment system, autonomy and safety software, and the Dashboard API. These modules may enable the system (100) to evaluate operational readiness, navigate autonomously, and communicate with higher-level applications. The Dashboard may provide operators with control and visualization features, including mobility output for tracking system movement, user control/override for human intervention, AI for generating automated inspection reports, and data visualization for presenting captured inspection results. Inspection intelligence may be handled by the Inspection module, which may deliver current and planned defect detection capabilities. Current features may include rail profile analysis using shape matching, fastener defect detection, fish plate/joggled fish plate defect detection, and rail head visual defect detection. Additional features may include railway gauge checking, wherein the system may be adapted to evaluate narrow gauge, meter gauge, standard gauge, broad gauge tracks, and other intermediate configurations. The AMR (500, 600) (illustrated in FIG. 5 and 6) may further perform cross-level and twist measurements, providing precise evaluation of rail tilt and torsional variations along the railway track plane. Further, the system may execute versine evaluations, both horizontal and vertical, to determine deviations in curvature and alignment that impact track smoothness and ride quality. The AMR (500, 600) may also incorporate rail weld defect detection, enabling the identification of discontinuities, cracks, or weaknesses at welded joints, which are critical to ensuring the long-term safety and integrity of the railway track. All inspection data may be integrated back into the Dashboard for analysis and reporting.

A person with ordinary skills in art will understand that the scope of the disclosure is not limited to the database server (102) as a separate entity. In an embodiment, the functionalities of the database server (102) can be integrated into the AMR (104) or into the one or more portable device (108).

In an embodiment, the AMR (104) may be coupled with a remote application server for autonomous inspection of elongated infrastructure elements. In an alternative embodiment, the AMR solely performs the functionalities of the application server, for autonomous inspection of elongated infrastructure elements. The application server may refer to a computing device or a software framework hosting an application or a software service. In an embodiment, the application server may be implemented to execute procedures such as, but not limited to, programs, routines, or scripts stored in one or more memories for supporting the hosted application or the software service. In an embodiment, the hosted application or the software service may be configured to perform one or more predetermined operations.

In an embodiment, the application server may be configured to utilize the database server (102) and the one or more portable device (108), in conjunction, for autonomous inspection of the elongated infrastructure elements. In an implementation, the application server corresponds to an infrastructure for implementing the method for autonomous inspection system for elongated infrastructure elements. The application server may be configured to receive data from one or more sensors. Further, the application server may be configured to communicate with an autonomous mobile robot (AMR) (500, 600) (as illustrated in FIGS. 5 and 6). In an embodiment, the one or more sensors corresponds LiDAR sensor, RADAR sensor, Ultrasonic sensors, stereo cameras, Time-of-Flight (ToF) sensors, laser sensor, optical camera sensor, Infrared Thermography Sensors, photogrammetry sensor, or a combination thereof. Further, the track geometry issues may correspond to gauge, cross-level, curvature, but not limited to surface defects such as corrugations, squats, skid spots, indentations, or a combination thereof. Further, detecting track anomalies correspond to deviations in track geometry, cant, surface defects.

In one embodiment, the application server is configured to execute a variety of functions related to data processing, analysis, and orchestration of inspection tasks. The application server may host pre-trained machine learning models and analytical pipelines that process sensor data transmitted from the AMR (500, 600). These processes include surface defect classification, anomaly severity scoring, geometric profiling, and environmental correlation analysis. Additionally, the application server may facilitate real-time decision support by generating alerts and recommended maintenance actions based on inspection outcomes. Further, the application server is configured to manage multi-user access, enabling field operators, supervisors, and administrators to securely interact with inspection results through dedicated user interfaces and dashboards.

The system (100) for autonomous inspection of the elongated infrastructure elements includes an application server configured to work with a database server (102) and one or more portable devices (108) for efficient track inspection. In one embodiment, the application server functions as an infrastructure support for railway track anomaly detection. The application server is designed to receive sensor data from various sources, including data collected by autonomous mobile robots (AMRs) (500, 600) using LiDAR sensors, high-resolution RGB/RGBD cameras, and other imaging systems. This data encompasses high-precision LiDAR and visual data, capturing both environmental details and track surface conditions. The data is then processed in real-time via a machine learning-based detection system, which utilizes pre-trained models for identifying track geometry issues (e.g., gauge, cross-level, curvature), surface defects (e.g., Corrugations, squats, skid spots, indentations) and traction issues (contact wire height, stagger, wire damage)

The application server upon receiving the sensor data, the application server processes the data, identifying any anomalies in track geometry or surface conditions. The application server creates a schedule for executing tasks in parallel, where each task is associated with specific sensor data and defect detection. This scheduling is dynamic and ensures that tasks are executed in parallel across available resources, maximizing performance and enabling rapid defect detection.

In an embodiment, the communication network (106) may correspond to a communication medium through which the AMR (104), the database server (102), the application server and the one or more portable device (108) may communicate with each other. Such a communication may be performed in accordance with various wired and wireless communication protocols. Examples of such wired and wireless communication protocols include, but are not limited to, Transmission Control Protocol and Internet Protocol (TCP/IP), User Datagram Protocol (UDP), Hypertext Transfer Protocol (HTTP), Wireless Application Protocol (WAP), File Transfer Protocol (FTP), ZigBee, EDGE, infrared IR), IEEE 802.11, 802.16, 2G, 3G, 4G, 5G, 6G, 7G cellular communication protocols, and/or Bluetooth (BT) communication protocols. The communication network (106) may either be a dedicated network or a shared network.

In one embodiment, the communication network (106) is configured to provide a robust and reliable channel for transmitting inspection-related data between the database server (102), the AMR (104), and the one or more portable devices (108). The communication network (106) may utilize wired connections such as Ethernet or optical fiber for fixed installations, and wireless connections such as 4G/5G cellular, Wi-Fi, satellite links, RF mesh, or Bluetooth Low Energy (BLE) for field-deployed scenarios. The communication network (106) ensures low-latency transfer of high-resolution sensor data and anomaly reports, and may further include encryption protocols to maintain confidentiality and integrity of critical infrastructure data. In another embodiments, the communication network (106) may incorporate adaptive bandwidth management and fault-tolerance mechanisms to sustain operations in remote or resource-constrained environments.

In some embodiments, the AMR (104) may be configured to handle data ingestion in batches, each batch corresponding to a predefined section of the elongated infrastructure element, and process the batches in parallel based on real-time metrics including incoming data volume, server load, and resource availability.

In an embodiment, the one or more portable devices (108) may refer to a computing device used by a user. The one or more portable devices (108) may comprise of one or more processors and one or more memory. The one or more memories may include computer readable code that may be executable by one or more processors to perform predetermined operations. In an embodiment, the one or more portable devices (108) may present a web user interface for the autonomous inspection system for elongated infrastructure elements using the AMR (104). Example web user interfaces presented on the one or more portable devices (108) and relevant information, for automated railway track detection. Examples of the one or more portable devices (108) may include, but are not limited to, a personal computer, a laptop, a computer desktop, a personal digital assistant (PDA), a mobile device, a tablet, or any other computing device.

In one embodiment, the one or more portable devices (108) may serve as inspection and reporting terminals that interface directly with the autonomous mobile robot (AMR) (500, 600) deployed in the field. The portable devices (108) may include handheld tablets, ruggedized laptops, or mobile communication devices equipped with custom applications to receive live inspection feeds, sensor snapshots, or anomaly detection results from the AMR (500, 600). These devices enable operators to validate inspection data in real-time, annotate findings, and issue manual overrides or commands to the AMR (500, 600) when required. Additionally, the portable devices (108) may store cached inspection data locally to ensure continuity of operations in case of network interruptions and later synchronize the cached data with the AMR (104) when connectivity is restored. In an exemplary embodiment, the portable devices (108) may also provide augmented reality (AR)-based visualizations to help operators identify and localize defects more effectively in the field.

In an exemplary embodiment, the system (100) may be configured to provide a mobility software application. Further, the mobility software application may allow the one or more robot's autonomous movement on the track from point A to B and may ensure that all AMR (500, 600) robot hardware is healthy.

The system (100) can be implemented using hardware, software, or a combination of both, which includes using where suitable, one or more computer programs, mobile applications, or "apps" by deploying either on-premises over the corresponding computing terminals or virtually over cloud infrastructure. The system (100) may include various micro-services or groups of independent computer programs which can act independently in collaboration with other micro-services. The system (100) may also interact with a third-party or external computer system. Internally, the system (100) may be the central processor of all requests for transactions by the various actors or users of the system.

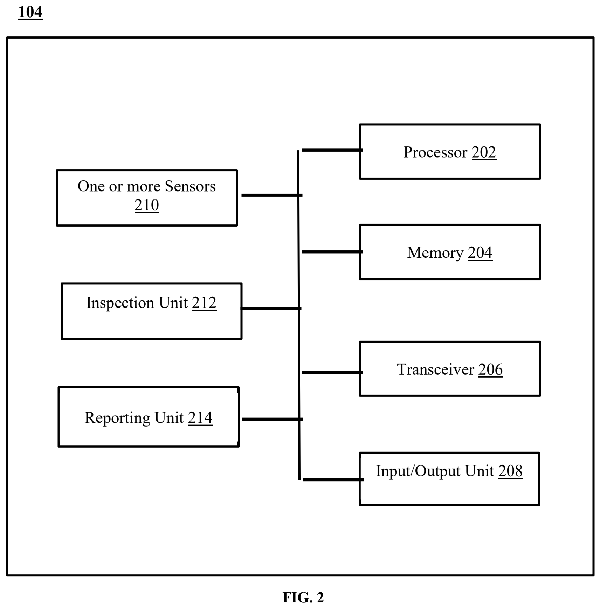

FIG. 2 illustrates a block diagram illustrating various components of the AMR (104) configured for autonomous inspection of elongated infrastructure elements, in accordance with an embodiment of the present subject matter. Further, FIG. 2 is explained in conjunction with elements from FIG. 1. Here, the AMR (104) preferably includes a processor (202), a memory (204), a transceiver (206), an Input/Output unit (208), one or more sensors (210), an inspection unit (212), a reporting unit (214). The processor (202) is further preferably communicatively coupled to the memory (204), the transceiver (206), the Input/Output unit (208), the one or more sensors (210), the inspection unit (212), the reporting unit (214), while the transceiver (206) is preferably communicatively coupled to the communication network (106).

While the present disclosure may be described with reference to railway track inspection, it should be appreciated that the system (100) is not limited to this domain. In an embodiment, the elongated infrastructure elements that may be inspected include at least one of one or more railway track, a roadway, a pipeline, a conveyor belt, a cable line, or a combination thereof. The autonomous inspection system is thus adaptable across multiple industrial sectors, ensuring scalability and wide-ranging applicability.

The processor (202) comprises suitable logic, circuitry, interfaces, and/or code that may be configured to execute a set of instructions stored in the memory (204), and may be implemented based on several processor technologies known in the art. The processor (202) works in coordination with the transceiver (206), the Input/Output unit (208), the one or more sensors (210), the inspection unit (212), and the reporting unit (214). Examples of the processor (202) include, but not limited to, standard microprocessor, microcontroller, central processing unit (CPU), Graphical Processing Unit (GPU), Tensor Processing Unit (TPU), Vision Processing Unit (VPU), an X86-based processor, a Reduced Instruction Set Computing (RISC) processor, an Application-Specific Integrated Circuit (ASIC) processor, and a Complex Instruction Set Computing (CISC) processor, distributed or cloud processing unit, state machines, logic circuitries, and/or any devices that manipulate signals based on operational instructions and/or other processing logic that accommodates the requirements of the present invention.

In an embodiment, the processor (202) is designed to manage high-volume and high-speed sensor data streams. The processor (202) may comprise at least one of a graphics processing unit (GPU), a vision processing unit (VPU), a tensor processing unit (TPU), or a combination thereof, to efficiently handle computationally intensive tasks such as visual recognition, point cloud analysis, and anomaly detection. The processor (202) may be configured to process the information captured by the one or more sensors (210) either in a real-time mode or in an offline mode. The real-time mode indicates processing of the information captured by the one or more sensors (210) during traversing of the AMR (500, 600) along the elongated infrastructure elements, thereby enabling immediate detection and reporting of anomalies. The offline mode indicates recording the information captured during the traversal of the AMR (500, 600), storing the information in the memory, and processing the information at a later time, sometimes in batches. This offline capability ensures that the system remains effective even in environments with limited network connectivity or constrained computational resources.

The memory (204) comprises suitable logic, circuitry, interfaces, and/or code that may be configured to store the set of instructions, which are executed by the processor (202). Preferably, the memory (204) is configured to store one or more programs, routines, or scripts that are executed in coordination with the processor (202). In yet another embodiment, the memory (204) may be managed under a federated structure that enables adaptability and responsiveness of the AMR (104). The memory (204) stores executable instructions, datasets, calibration values, anomaly detection thresholds, and pre-trained machine learning (ML) models for analyzing sensor data. In some embodiments, the memory (204) may also maintain historical inspection data, logs of task execution, and metadata associated with sensor calibration and performance. The memory (204) may be implemented as on-chip memory, external modules, or distributed cloud storage, and may include buffer mechanisms and caching logic for real-time retrieval of inspection-critical data.

The transceiver (206) comprises suitable logic, circuitry, interfaces, and/or code that may be configured to receive, process or transmit information, data or signals, which are stored by the memory (204) and executed by the processor (202). The transceiver (206) is preferably configured to receive, process or transmit, one or more programs, routines, or scripts that are executed in coordination with the processor (202). The transceiver (206) is preferably communicatively coupled to the communication network (106) of the system (100) for communicating all the information, data, signal, programs, routines or scripts through the network. The transceiver (206) may be configured to receive data from a plurality of sources, and the plurality of sources corresponds to one or more data channels. The transceiver (206) may be configured to handle adaptive bandwidth allocation, error correction, packet synchronization, and encryption for secure and reliable transmission of sensor data, anomaly reports, and command signals.

The transceiver (206) may implement one or more known technologies to support wired or wireless communication with the communication network (106). In an embodiment, the transceiver (206) may include, but is not limited to, an antenna, a radio frequency (RF) transceiver, one or more amplifiers, a tuner, one or more oscillators, a digital signal processor, a Universal Serial Bus (USB) device, a coder-decoder (CODEC) chipset, a subscriber identity module (SIM) card, and/or a local buffer. Also, the transceiver (206) may communicate via wireless communication with networks, such as the Internet, an Intranet and/or a wireless network, such as a cellular telephone network, a wireless local area network (LAN) and/or a metropolitan area network (MAN). Accordingly, the wireless communication may use any of a plurality of communication standards, protocols and technologies, such as: Global System for Mobile Communications (GSM), Enhanced Data GSM Environment (EDGE), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email, instant messaging, and/or Short Message Service (SMS).

The input/output (I/O) unit (208) comprises suitable logic, circuitry, interfaces, and/or code that may be configured to receive or present information. The input/output unit (208) comprises various input and output devices that are configured to communicate with the processor (202). Examples of the input devices include, but are not limited to, a keyboard, a mouse, a joystick, a touch screen, a microphone, a camera, and/or a docking station. Examples of the output devices include, but are not limited to, a display screen and/or a speaker. The I/O unit (208) may include a variety of software and hardware interfaces, for example, a web interface, a graphical user interface, and the like. The I/O unit (208) may allow the system (100) to interact with the user directly or through the portable devices (108). Further, the I/O unit (208) may enable the system (100) to communicate with other computing devices, such as web servers and external data servers (not shown). The I/O unit (208) can facilitate multiple communications within a wide variety of networks and protocol types, including wired networks, for example, LAN, cable, etc., and wireless networks, such as WLAN, cellular, or satellite. The I/O unit (208) may include one or more ports for connecting a number of devices to one another or to another server. In one embodiment, the I/O unit (208) allows the AMR (104) to be logically coupled to other portable devices (108), some of which may be built in. In one embodiment, the Input/Output unit (208) may include logic for exporting inspection results in standardized formats, thereby enabling integration with enterprise asset management systems and predictive maintenance platforms. Illustrative components include tablets, mobile phones, desktop computers, wireless devices, etc.

In one embodiment, the elongated infrastructure element comprises one or more railway tracks, wherein the AMR (500, 600) is configured to traverse along the rail geometry and capture data corresponding to alignment, curvature, cross-level, elevation, spacing, and surface wear. The sensors mounted on the AMR (500, 600) enable detection of surface defects such as cracks, corrugation, spalling, fastener loosening, and ballast-related issues. The AMR (500, 600) may further inspect Overhead Equipment (OHE) associated with railway tracks, ensuring a comprehensive health assessment of the entire railway infrastructure. In one embodiment, the elongated infrastructure element comprises a roadway, wherein the AMR (500, 600) is configured to traverse along the paved surface to monitor anomalies including rutting, potholes, surface cracks, skid resistance, and unevenness. The roadway inspection may comprise detection of lane markings, signage degradation, drainage obstructions, and subsurface inconsistencies. The one or more sensors (210) may also capture traffic load-induced vibrational data during traversal, which enables predictive maintenance of roadways.

In one embodiment, the elongated infrastructure element may comprise a pipeline, wherein the AMR (500, 600) is configured to perform above-ground or in-tunnel inspection of oil, gas, or water pipelines. The inspection unit processes multi-modal sensor data to detect corrosion, leakage, cracks, wall thinning, joint integrity issues, and thermal anomalies indicative of flow disturbances. Ultrasonic and thermography sensors may be specifically employed for non-destructive evaluation of buried or insulated pipelines. In one embodiment, the elongated infrastructure element may comprise a conveyor belt, wherein the AMR (500, 600) is configured to monitor wear and tear of the belt surface, misalignment of rollers, material spillage, and joint failures. High-resolution imaging and laser profilers are employed to capture belt surface anomalies with sub-millimeter accuracy. Vibration analysis may be used to detect roller bearing failures or mechanical imbalance that could affect conveyor system efficiency. In one embodiment, the elongated infrastructure element may comprise a cable line, wherein the AMR (500, 600) is configured to traverse alongside electrical, communication, or traction power cables. The inspection unit employs thermography and infrared sensors to detect hotspots, insulation degradation, surface cracks, and sheath wear. Imaging sensors may additionally capture signs of mechanical damage or environmental stress such as sagging or vegetation infringement on overhead cables.

In another embodiments, the elongated infrastructure elements may comprise a combination of the aforementioned elements. Further, the AMR (500, 600) may operate in a multi-domain environment. For instance, an inspection operation may involve monitoring railway tracks along with associated overhead cables, or roadway surfaces with embedded pipelines. The inspection system may seamlessly switch between sensor modes and processing models depending on the type of infrastructure element being inspected, thereby ensuring adaptability and scalability of the system.

In one embodiment, the AMR (500, 600) may comprise one or more protective enclosures configured to shield the sensors from environmental and operational hazards. The enclosures may be formed from lightweight yet durable materials such as reinforced composites, anodized aluminium, or impact-resistant polymers, which provide resistance against dust ingress, moisture penetration, mechanical vibrations, and accidental impacts during traversal. In addition, the enclosures may include transparent windows for optical sensors, ensuring unobstructed imaging while maintaining protection.

In another embodiment, the AMR (500, 600) may comprise one or more mobility mechanisms configured to facilitate autonomous traversal along the elongated infrastructure elements. The mobility mechanisms may include a plurality of wheels driven by actuators that provide controlled propulsion, steering, and braking. The wheels may be designed with adaptive treads to accommodate different track surfaces, while the actuators ensure stability and controlled movement even in curved or inclined segments of the infrastructure.

In another embodiment, the AMR (500, 600) may comprise an adaptive suspension mechanism configured to damp vibrations and maintain sensor stability during navigation over uneven or rough surfaces. The suspension system may dynamically adjust stiffness and damping properties based on terrain feedback, thereby minimizing disturbances transmitted to the sensors and ensuring high-fidelity data capture across all inspection conditions.

In another embodiment, the AMR (500, 600) may comprise a localization unit integrated with its navigation and processing framework, configured to provide precise geolocation of detected anomalies. The localization unit may combine Global Positioning System (GPS) coordinates, odometry based distance measurement, integration of odometry/GPS data with digital map of rail network, network-assisted localization, onboard system clock-based time tagging, chainage information, and reference marker identifiers such as pole numbers or distance markers along the infrastructure. By correlating detected anomalies with positional data, the system ensures accurate defect mapping and simplifies subsequent maintenance planning.

In another embodiment, the AMR (500, 600) may comprise an integrated powerhouse configured to supply reliable energy to all on-board subsystems. The powerhouse may include one or more rechargeable batteries arranged in a predefined modular configuration to optimize weight distribution and energy capacity. In addition, supporting electronic components such as power converters, regulators, and monitoring units may be included to ensure safe, efficient, and uninterrupted power delivery to the AMR (500, 600), even during extended inspection missions. The AMR (500, 600) may be designed with a protection level of at least IP55, enabling reliable operation in temperatures ranging from -20 °C to 50 °C. In some embodiments, the AMR (500, 600) may include a rechargeable battery pack configured to provide at least four hours of continuous operation, with provisions for manual charging.

In another embodiment, the one or more sensors (210) of the AMR (500, 600) is disclosed. The one or more sensors (210) may be configured for sensing one or more sensor data. Further, the one or more sensor data may be received from the one or more robots. Further, the one or more sensors (210) may be placed on an autonomous mobile robot AMR (500, 600). Further, the one or more sensor data may correspond to high-precision LiDAR data, visual data from high-resolution RGB/RGBD cameras, profiler data or a combination thereof. Further, the profiler may act as a laser based imaging system. Further, the mechanism may be integrated with protective mechanisms such as specialized enclosures and shock-absorbing mounts to withstand harsh operating environments. These protective features ensure the durability and reliability of the one or more sensors (210), allowing them to perform optimally under conditions involving vibrations, debris, moisture, and sudden impacts commonly encountered in railway track inspections. Further, the high-precision LiDAR sensors may enable it to capture detailed three-dimensional spatial data of the tracks, identifying deviations in track geometry, including track gauge, cross-level, curves. Further, the high-resolution RGB/RGBD cameras may provide visual data enriched with depth information, enabling detection of surface defects such as cracks, crushed rail heads, localized collapses, and chip-offs.

In another embodiment, the one or more sensors (210) may comprise at least of visual imaging sensor, LiDAR sensor, range sensor, laser profiler, ultrasonic sensor, infrared sensor, thermography sensor, or a combination thereof. In one embodiment, the visual imaging sensor may comprise one or more optical cameras such as stereo cameras, high-resolution cameras, RGB cameras, or RGB-D cameras. These imaging sensors may be configured to capture surface-level defects including cracks, chipping, spalling, and discoloration, as well as anomalies in fastener assemblies. Stereo and RGB-D cameras may additionally provide depth information to reconstruct three-dimensional models of the elongated infrastructure element. The captured images may be further processed using machine learning or computer vision techniques for pattern recognition, defect segmentation, and automated classification. The imaging sensors may incorporate optical filters, adjustable lenses, and exposure control logic to operate in variable lighting conditions.

In another embodiment, the LiDAR sensor is configured to emit laser pulses and measure their reflections to generate dense 3D point cloud data corresponding to the elongated infrastructure element. The LiDAR sensor enables precise geometric inspection, detecting spacing inconsistencies, cross-level variations, alignment deviations, curvature irregularities, and elevation differences. The LiDAR data may be fused with imaging data to enhance structural anomaly detection and to generate digital twins (3D model) of inspected tracks, pipelines, or cables. The LiDAR sensor may be mounted on the AMR (500, 600) with vibration damping assemblies to ensure accuracy during traversal at varying speeds. In another embodiment, the data captured by the one or more sensors (210) is not limited to high-resolution visual data but may include data obtained from one or more imaging and/or range sensing devices. Such devices may comprise optical cameras, infrared sensors, laser scanners, LiDAR, structured light profilers, and ultrasonic transducers, either individually or in combination, thereby broadening the range of measurable inspection parameters.

The digital twins are generated using sets of LiDAR point cloud data throughout the length of the track collected by the AMR (500, 600). This point cloud data is then amalgamated, aligned, meshed and matched with known asset geometries for asset identification & tagging, as well as geometric defect detection in these identified assets. The potential steps for defect detection comprises i. LiDAR pre-processing, involves de-noising and down sampling to manageable density, ii. segmentation and alignment ML methods to isolate individual components (rail, ballast/slab, OHE, vegetation, etc.), iii. feature extraction of certain geometric descriptors like curvatures, edges, rail profile slices, etc., iv. comparison with baseline descriptors (both nominal and historical), v. defect tagging and reporting (includes a defect categorization wherever that applies, and the localization output matching the location of the anomaly). Notably, comparison with the historical descriptors (along with the localization) leads to potential predictive maintenance alerts.

In another embodiment, the range sensor comprises laser-based distance measurement modules configured to detect defects that are not visible to optical sensors. These sensors may employ time-of-flight or phase-shift measurement techniques to identify material deformations, or coating delamination. The range sensors enable detection of anomalies under low-visibility conditions such as dust, fog, or darkness. In certain embodiments, the range sensor may be integrated with positioning units to measure the relative displacement between different parts of the elongated infrastructure element, thereby allowing detection of sagging, bending, or expansion-related issues.

In another embodiment, the laser profiler comprises a 2D or 3D profile measurement sensor configured to scan cross-sectional or longitudinal profiles of the elongated infrastructure elements. In one embodiment, the laser profiler may be capable of detecting wear patterns, corrugations, surface irregularities, and structural anomalies with a high precision. The laser profiler may employ triangulation-based methods or structured laser patterns to obtain accurate measurements across metallic or composite surfaces. The generated profile data may be compared against reference templates or design specifications stored in the memory (204) to identify deviations exceeding allowable tolerances. In an embodiment, the one or more sensors (210) are configured to detect track geometry deviations with an accuracy ranging from ±0.1 mm to ±1 mm, and surface defects with an accuracy ranging from ±0.1 mm to ±2.5 mm. The sensor suite thereby enables high-precision inspection of the elongated infrastructure elements, ensuring detection of subtle irregularities that may otherwise remain undetected. In yet another embodiment, the sensor suite (210) further comprises a two-dimensional (2D) and/or three-dimensional (3D) profiler. The 2D/3D profiler is configured for rail profile measurement and for detection of defects with dimensions as small as ±0.1 mm, enabling precise monitoring of wear, deformation, and micro-surface anomalies along the elongated infrastructure element.

In another embodiment, the ultrasonic sensor is configured to perform non-destructive testing (NDT) of the elongated infrastructure elements by transmitting high-frequency acoustic waves and analyzing the reflected signals. The ultrasonic sensor may enable detection of internal cracks, delamination, voids, and thickness variations within metallic or composite structures. In another embodiment, the ultrasonic measurements may be processed in real-time to identify critical defects that may not be visible on the surface. In an exemplary embodiment, phased-array ultrasonic sensors may be used to scan larger areas and generate detailed subsurface maps of the inspected elements.

In another embodiment, the infrared sensor is configured to capture thermal radiation signatures emitted from the elongated infrastructure elements. Variations in the thermal profile may indicate overheating, material fatigue, or improper insulation of the elements. In another embodiment, the infrared sensor may operate in multiple spectral bands to detect anomalies under different environmental conditions. In an exemplary embodiment, the infrared sensor may be combined with active heating mechanisms to highlight structural discontinuities through induced thermal gradients.

In one embodiment, the thermography sensor is configured to capture detailed thermal images for detecting anomalies such as hotspots, localized heating, improper bonding, or surface fatigue. Unlike single-point infrared sensors, the thermography sensor generates high-resolution thermal maps of entire sections of the elongated infrastructure elements. These thermal maps may be analyzed to identify potential failure zones and to monitor temperature variations over time. In an exemplary embodiment, thermography sensors may be particularly useful for monitoring electrical cables, overhead equipment, and pipelines where temperature is a critical health indicator.

In one embodiment, the surrounding data captured by the one or more sensors (210) includes contextual information about the environment and structural assembly of the elongated infrastructure elements. Such data may comprise visual defects in fastener assemblies, wear in rail profiles, anomalies in overhead equipment components, and schedule of dimensions (SOD) infringements. In addition, the surrounding data may include vertical vibrational analysis based on inertial measurement unit (IMU) data collected during traversal of the AMR (500, 600). The vibrational data provides insight into uneven track support, alignment inconsistencies, and localized weak zones that may otherwise be difficult to detect visually.

The first step in SOD measurement is carried out during digital twin modelling, where the rail track is isolated from the surrounding point cloud. Using clearance specifications provided by the relevant authorities, the maximum train envelope is then projected along the track. Any point clusters detected within this envelope are flagged for defect tagging and reporting, following the same process described above. An alternative method leverages depth cameras mounted at the front and rear of the AMR (500, 600). This approach involves (i) detecting and localizing the track in real time and (ii) projecting the train envelope above it to identify potential anomalies. Detected intrusions can then be validated either through back-projection into the LiDAR point cloud (sensor fusion) for higher precision, or directly from the depth camera data when faster, lower-resolution analysis is sufficient.

In another embodiment, the one or more sensors (210) may be designed to enable seamless real-time data acquisition, even at high operational speeds, by leveraging synchronized data streams from multiple sensors. This ensures a comprehensive and holistic understanding of the railway tracks, enabling the detection of even minute anomalies with extreme precision. The integration of AI-driven analytics with the sensor data may allow for automated processing and anomaly identification, ensuring that critical defects are not overlooked. In addition, the one or more sensors (210) may incorporate environmental calibration techniques to adapt to changing light conditions, temperature variations, and external interference, further enhancing the accuracy of defect detection.

In yet another embodiment, the one or more sensors (210) may be configured to relay the collected data to the application server for further analysis and processing. By ensuring the integrity and precision of the data transmitted, the sensors may facilitate advanced machine learning models to detect and classify anomalies efficiently. Further, the real-time streaming of sensor data may enable the system (100) to provide instant feedback on the track condition, ensuring maintenance teams receive timely alerts and actionable insights. Additionally, the robust design of the one or more sensors (210) may ensure longevity and reduces the need for frequent recalibration or replacements, making the system highly cost-effective and reliable for automated railway track inspections.

In one embodiment, the one or more sensors (210) may comprise hardware sensing modules, analog/digital conversion circuits, and associated firmware configured to capture inspection data corresponding to the elongated infrastructure elements. In another embodiment, the one or more sensors (210) may be synchronized to provide multi-modal datasets that enable correlated analysis of geometry deviations, surface defects, fastener looseness, and SOD infringements. The sensors (210) may further be enclosed in protective housings resistant to dust, moisture, vibrations, and mechanical impacts. Sensor calibration logic may also be implemented to ensure accuracy over prolonged deployment periods.

In another embodiment, the inspection unit (212) of the AMR (104) is disclosed. The inspection unit (212) is designed to facilitate comprehensive monitoring and assessment of the system's operations and serves as a critical component within the AMR (104). The inspection unit (212) is responsible for collecting, processing, and analyzing data obtained from the one or more sensors (210), devices, or systems integrated within the operational environment. The inspection unit (212) may further perform diagnostic tasks, including monitoring the health and performance of hardware components, tracking the status of software applications, and identifying potential issues before they escalate into critical failures.

In an exemplary embodiment, the inspection unit (212) may be configured to receive sensor data from an autonomous mobile robot (AMR) (500, 600). The received data may correspond to high-precision LiDAR data, visual data from high-resolution RGB/RGBD cameras, or other sensor modalities for capturing environmental details, track surface conditions, or a combination thereof. Based on the received sensor data, the inspection unit (212) may be configured to perform multiple analyses, such as profile analysis using a shape-matching mechanism, fastener defect detection, fish plate or jogged fish plate defect detection, and rail head visual defect detection. Further, the inspection unit (212) may be configured to process the received sensor data using one or more pre-trained machine learning models. In such embodiment, the inspection unit (212) operates in coordination with the reporting unit (214), which transmits the processed detection results, corresponding anomaly logs, and related metadata to the remote-control unit or external server for further maintenance planning and decision-making.

In one embodiment, the system (100) comprises an inspection unit (212) coupled with the processor (202). The inspection unit (212) is configured to inspect the information captured by the one or more sensors (210). Specifically, the inspection unit (212) processes sensor data in real-time using one or more pre-trained machine learning (ML) models stored in the memory (204). These ML models may include, but are not limited to, convolutional neural networks (CNNs) for defect image recognition, recurrent neural networks (RNNs) for sequential anomaly detection in vibration data, transformer-based models for multi-modal data correlation, and clustering algorithms for outlier detection across geometric datasets. By leveraging the ML-based inference capability, the inspection unit (212) is able to detect one or more anomalies such as cracks, surface deformations, geometric deviations, fastener loosening, or schedule of dimension (SOD) infringements along the elongated infrastructure element.

In another embodiment, the inspection unit (212) is configured to prioritize the detected anomalies based on the severity and urgency of predictive maintenance requirements. The prioritization mechanism may utilize a weighted scoring system that takes into account multiple parameters, such as anomaly type, defect progression rate, environmental influence, and historical failure patterns stored in the database server (102). For example, critical anomalies such as severe rail cracks or significant misalignment may be assigned high priority for immediate maintenance action, whereas minor surface wear may be logged for routine inspection cycles. This prioritization ensures that maintenance resources are allocated effectively, thereby reducing downtime and preventing catastrophic failures. Further, the inspection unit (212) is configured to generate and transmit inspection logs corresponding to the one or more sensors (210) to a remote-control unit (e.g., a remote server). These logs may include raw sensor data, processed anomaly detection results, anomaly classification labels, severity scores, timestamps, and precise geolocation information derived from the localization unit. The transmission may occur via one or more communication protocols such as TCP/IP, HTTP, MQTT, or secure wireless communication standards. By transmitting these inspection logs, the inspection unit (212) enables remote operators to monitor inspection outcomes in near real-time, validate ML model predictions, and update maintenance schedules accordingly.

In yet another embodiment, the inspection unit (212) may also be configured to identify environmental factors impacting the condition of the elongated infrastructure element. Such environmental factors may include debris accumulation, flooding, temperature fluctuations, and weather-induced wear. The system (100) may incorporate the detected environmental factors into its anomaly prioritization process to enhance reliability of inspection results.

In an embodiment, the inspection unit (212) may employ one or more pretrained machine learning (ML) models to analyze the information captured by the one or more sensors (210). The ML models may include computer vision algorithms for shape matching, wherein captured profiles of the elongated infrastructure elements and their components are compared against reference shapes to identify deviations indicative of wear, damage, or misalignment. The ML models may be trained on at least one of geometric data, surface data, profile data, surrounding data, or a combination thereof, to enable robust detection of anomalies. The anomalies detectable by the inspection unit (212) may comprise geometric deviations such as spacing irregularities between parallel elements, tilt, bends, and height differences in curved sections of the elongated infrastructure; surface defects such as pitting, erosion, fractures, or material degradation; and profile deviations such as cross-sectional shape variations, thickness differences, or wear along the length of the element. Additional anomalies may include rail wear, cracks, corrugations, squats, skid spots, indentations, crushed heads, chips, and defects associated with fasteners such as missing fasteners, fastener looseness, plate or liner damage, and bolting looseness. In another embodiments, the inspection unit (212) may also be configured to detect anomalies in overhanging equipment (OHE), such as deviations in OHE height, wire stagger, thickness and wear, or issues with Automatic Tensioning Devices (ATDs) and other overhead components associated with the elongated infrastructure. Furthermore, the system may be capable of identifying clearance violations or SOD infringements. Such ML-based anomaly detection allows the inspection unit (212) to deliver comprehensive, scalable, and high-accuracy inspection capabilities across a wide range of infrastructure elements.

In an embodiment, the reporting unit (214) of the AMR (104) is disclosed. Further, the reporting unit (214) may be configured to create a real-time schedule for processing the one or more sensor data and the detected anomalies. Further, the reporting unit (214) may be configured to transmit the detected anomalies with reporting for precise localization to a remote-control center for maintenance intervention. Further, the identification of various track defects, including but not limited to, structural damages, misalignments, or any abnormalities in the rail surface that may pose a risk to the safety and performance of the railway system. Further, the detected anomalies may comprise cracks, corrosion, loose fasteners, misaligned rails, or worn-out components, or a combination thereof.

In yet another embodiment, the reporting unit (214) may be configured to identify environmental factors that may impact the track's operational conditions. Further, the environmental factors may correspond to debris accumulation, flooding, temperature fluctuations, or excessive wear caused by weather conditions. Further, the reporting unit (214) may be configured to analyze the sensor data in real-time, by enabling immediate action to be taken before the issues escalate into more significant problems. Further, the reporting unit (214) may be configured to prioritize the anomalies based on their severity. For instance, critical defects that could lead to derailments or catastrophic failures are flagged for immediate attention, while less critical anomalies may be scheduled for subsequent inspections. The real-time scheduling functionality ensures that resources, such as maintenance crews or specialized equipment, are allocated efficiently and in alignment with the urgency of the detected issues. This prioritization helps optimize the overall maintenance workflow, reducing downtime and ensuring that the most pressing issues are addressed first. Further, once the anomalies are detected and prioritized, the reporting unit (214) may be configured to transmit the data to a remote-control center for analysis and intervention. Further, the reporting unit (214) may provide a precise localization information, such as GPS coordinates or track section identifiers, allowing maintenance teams to be dispatched to the exact location of the anomaly.

In another embodiment, the reporting unit (214) may be coupled with a communication module configured to support wired and/or wireless connectivity. The communication module may enable secure and encrypted transmission of the detected anomalies, precise location information, and generated reports to a remote-control unit for maintenance intervention. The secure data exchange mechanism ensures that sensitive operational data is protected from unauthorized access or tampering during transmission, thereby maintaining system integrity and reliability.

In another embodiment, the reporting unit (214) may be configured to utilize advanced artificial intelligence models, such as a large language model (LLM), a generative adversarial network (GAN) model, or a combination thereof, to generate comprehensive anomaly reports. The generated report may comprise, but is not limited to, information on the one or more anomalies in the elongated infrastructure elements, classification of the anomalies based on severity, precise location information, and predictive maintenance recommendations. By leveraging AI-driven models, the reporting unit (214) provides not only descriptive insights but also predictive and prescriptive intelligence to assist in timely decision-making. The artificial intelligence module is configured to fetch inspection logs, correlate them with client-specific requirements, and generate automated inspection reports tailored to predefined formats, regulatory standards, or customer preferences.

In another embodiment, the reporting unit (214) is augmented with a localization suite for precise mapping of anomalies. The localization suite extends beyond conventional GPS-based tagging, and may include, but is not limited to, identification of the pole number between which an anomaly is detected, the chainage value corresponding to the inspection location, and any other rail-specific georeferencing identifiers. The integration of GPS, pole number, and chainage provides a rail-centric reporting framework, enabling precise and unambiguous localization of defects.

In yet another embodiment, the reporting unit (214) may be configured to fetch historical inspection logs from the remote-control unit. The fetched logs may be combined with the newly detected anomalies to generate context-aware reports, enabling trend analysis, anomaly progression tracking, and more accurate predictive maintenance recommendations. This log-based augmentation enhances the accuracy and completeness of the generated reports, supporting both immediate maintenance actions and long-term infrastructure planning.

In an embodiment, the reporting unit (214) may further include an alarm mode integrated with the AMR (500, 600). The alarm mode may comprise acoustic and photoelectric alarms that are triggered upon detection of critical anomalies on the elongated infrastructure element, thereby providing immediate on-site alerts.

A person skilled in the art will understand that the scope of the disclosure should not be limited to railway track inspection domain and using the aforementioned techniques. Further, the examples provided in supra are for illustrative purposes and should not be construed to limit the scope of the disclosure.

Let us delve into a detailed working example of the present disclosure.

### Example 01: Railway Track Inspection

A national railway operator, X Railways, is responsible for inspecting and maintaining thousands of kilometres of railway tracks across diverse terrains. To improve accuracy, efficiency, and safety, the operator deploys the autonomous inspection system (100) equipped with autonomous mobile robots (AMRs), an application server, and intelligent inspection and reporting units.

The inspection process begins with data ingestion, where AMR collect high-resolution information from multiple on-board sensors. These include LiDAR sensors for capturing detailed 3D track geometry, RGB/RGBD cameras for visual surface inspection, and vibration sensors for assessing dynamic responses. As the AMR moves at a speed of 35 km/h (approx. 9.7 m/s), it streams approximately 18-20 GB of sensor data per hour to the application server. This continuous feed ensures the capture of railhead surface cracks, fastener conditions, fish plate joints, and track alignment deviations in real time.

Once ingested, the application server employs a batching mechanism to segment the incoming sensor streams into 2-km sections. Each batch includes synchronized point clouds, camera frames, and vibration profiles. The inspection unit, coupled with the processor, processes these batches using pre-trained machine learning models for real-time anomaly detection. For instance, in one 2-km batch, the system may detect two critical gauge deviations, one jogged fish plate, and multiple minor surface-level defects. This batch-wise processing allows prioritization of anomalies according to severity and geographic location.

The processing manager dynamically scales computational resources depending on operational load. For example, when three AMRs simultaneously inspect parallel track sections, the server allocates 12 GPU cores and 32 GB RAM to handle concurrent processing of shape-matching analysis, railhead defect classification, and fastener anomaly detection. During off-peak operation, resources are scaled down to 6 GPU cores and 16 GB RAM, optimizing system efficiency without compromising detection accuracy.

The reporting unit generates actionable insights for operators through a live dashboard. The dashboard presents progress indicators such as "Inspection 75% completed for 10-km stretch Section B," categorized defect counts (e.g., 3 critical, 7 moderate, 15 minor), and GPS-tagged defect locations. For example, the system may display alerts showing: *Critical gauge deviation at GPS 12.34567 N, 76.54321 E; Missing fastener at 12.34590 N, 76.54390 E; and Railhead crack at 12.34620 N, 76.54410 E.* These details enable immediate field intervention for high-priority cases.

After completion of the inspection cycle, the system compiles a comprehensive report that not only lists detected anomalies but also incorporates predictive insights. For instance, based on historical progression of similar cracks, the system may estimate a 60% likelihood of railhead fracture within the next 90 days if corrective maintenance is not performed. This predictive capability ensures proactive decision-making, reducing risks of sudden infrastructure failures.

By combining autonomous inspection, real-time processing, AI-driven anomaly detection, and predictive reporting, X Railways achieves significant operational improvements. Inspection cycles are shortened by 40%, manual labor is reduced by 60%, and safety levels are markedly enhanced. The system (100) thus offers a scalable and future-proof approach to railway infrastructure inspection and management.

A person skilled in the art will understand that the scope of the disclosure is not limited to scenarios based on the aforementioned factors and using the aforementioned techniques, and that the examples provided do not limit the scope of the disclosure.

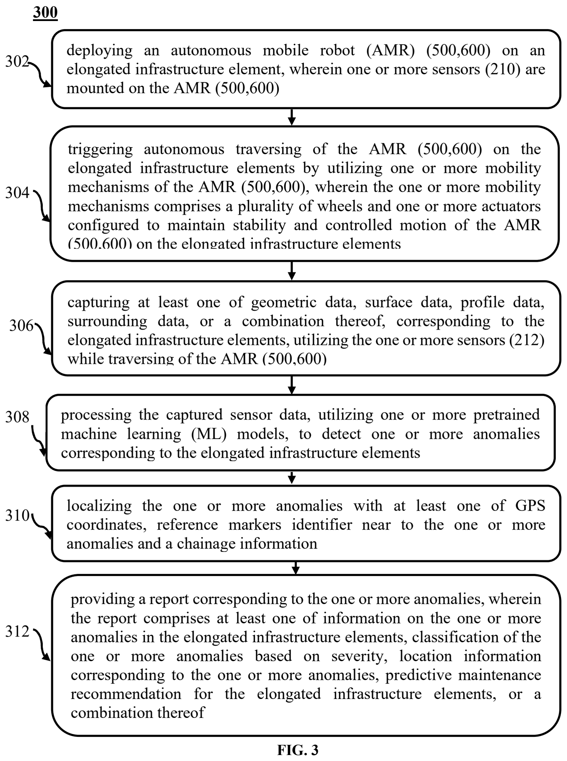

Referring to Fig. 3, a flowchart that illustrates a method (300) for autonomous inspection of elongated infrastructure elements, in accordance with at least one embodiment of the present subject matter.

At step (302), the method (300) may comprise deploying an autonomous mobile robot (AMR) (500, 600) on an elongated infrastructure element, wherein one or more sensors (210) are mounted on the AMR (500, 600).

At step (304), the method (300) may comprise triggering autonomous traversing of the AMR (500, 600) on the elongated infrastructure elements by utilizing one or more mobility mechanisms of the AMR (500, 600), wherein the one or more mobility mechanisms comprises a plurality of wheels and one or more actuators configured to maintain stability and controlled motion of the AMR (500, 600) on the elongated infrastructure elements. In one configuration, the one or more actuators may be further configured to adjust the lateral spacing of the plurality of wheels, thereby adapting the AMR (500, 600) to different railway gauges, including narrow gauge, meter gauge, standard gauge, broad gauge, and other intermediate configurations. In one embodiment, the one or more actuators being actuated manually through a manual intervention by an operator or a technician. In another embodiment, the one or more actuators are actuated automatically by a control or processing unit. This dynamic gauge-adjustment capability enables the AMR (500, 600) to operate seamlessly across diverse railway infrastructures without requiring structural modification.

At step (306), the method (300) may comprise capturing at least one of geometric data, surface data, profile data, surrounding data, or a combination thereof, corresponding to the elongated infrastructure elements, utilizing the one or more sensors (210) while traversing of the AMR (500, 600).

At step (308), the method (300) may comprise processing the captured sensor data, utilizing one or more pretrained machine learning (ML) models, to detect one or more anomalies corresponding to the elongated infrastructure elements.

At step (310), the method (300) may comprise localizing the one or more anomalies with at least one of GPS coordinates, odometry based distance measurement, integration of odometry/GPS data with digital map of rail network, network-assisted localization, onboard system clock-based time tagging, reference markers identifier near to the one or more anomalies and a chainage information.

At step (312), the method (300) may comprise providing a report corresponding to the one or more anomalies, wherein the report comprises at least one of information on the one or more anomalies in the elongated infrastructure elements, classification of the one or more anomalies based on severity, location information corresponding to the one or more anomalies, predictive maintenance recommendation for the elongated infrastructure elements, or a combination thereof.

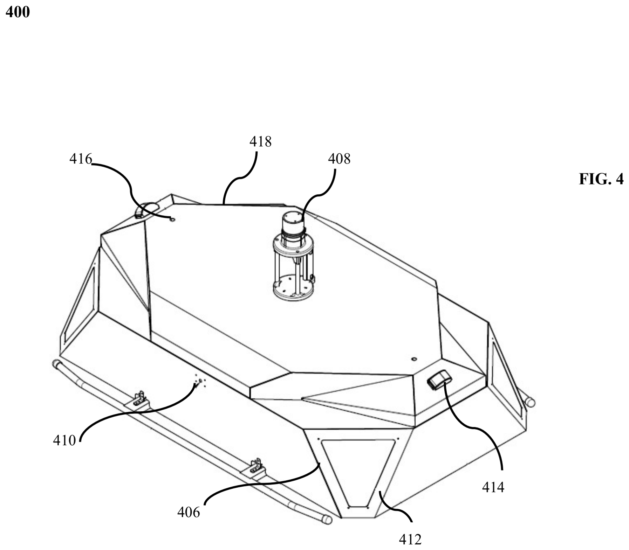

Now referring to FIG. 4 and FIG. 5, a structure of autonomous inspection of elongated infrastructure elements is illustrated, in accordance with an embodiment of the present subject matter. As illustrated in FIG. 4, the body cover structure of the robot (500) comprises an upper body (418) and a lower body (406). The upper body (418) may accommodate 3D LiDAR sensors (408), a front camera (410), control indication lights (412), and side indication lights (414), enabling perception and inspection of the railway track. The lower body (406) may support locomotion and mounting stability, while also housing critical electronics. The emergency switch (416) may be provided on the upper body (418) for operational safety, allowing immediate deactivation of the AMR (500) in case of hazardous conditions.

Further, FIG. 5 illustrates the autonomous mobile robot (AMR) (500), in accordance with an embodiment of the present subject matter. The AMR (500) includes components such as one or more electronics boxes (502), a sensor mount frame (504), a body mount frame (506), a drivetrain motor assembly (508), a rear bumper safety rod (510), a rear rail wheel (512), a front rail wheel (514), a front bumper safety rod (516), and a chassis (518). These elements collectively provide the mechanical structure, mobility, and safety features required for the AMR (500) to operate reliably on the railway track while performing autonomous inspection tasks. The drivetrain motor assembly (508) and rail wheels (512, 514) may ensure accurate, guided movement along the railway track, while maintaining balance and stability even under dynamic track conditions. The sensor mount frame (504) and body mount frame (506) may be configured to secure the sensor suite with vibration isolation, ensuring data accuracy. The one or more electronics boxes (502) may house processing units, power supply modules, and communication systems essential for navigation and real-time data handling. The front bumper safety rods (516) and rear bumper safety rods (510) may provide physical protection against collisions and obstacles.

Together, the FIG. 4 components (sensing and control indicator and cover) and the FIG. 5 components (mechanical and structural) enable the AMR (500) to operate reliably, ensuring precise inspection during autonomous missions.

As the AMR (500) moves autonomously along the railway track, powered by the drivetrain motor assembly (508) and stabilized by the rear rail wheel (512) and front rail wheel (514), the body structure (400) may continuously inspect the track's geometry and condition with high precision. The AMR (500) may be configured to identify geometry-related issues, including deviations in gauge (distance between rails), cross-level (rail tilt), and curvature (rail height differences in curved sections).

Additionally, the AMR (500) may be configured to detect and calculate surface defects, including corrugations, squats, skid spots, indentations, or combinations thereof. The sensor suite mounted on the sensor mount frame (504) may enable synchronized collection of LiDAR, RGB/RGBD, and laser imaging data. Further, the AMR (500) may monitor rail fasteners that secure the rails to the sleepers, thereby identifying loose, missing, or defective components that could compromise the stability of the railway track. To improve traceability, the AMR (500) may also provide GPS-tagging of detected defects, enabling precise geolocation for maintenance and repair operations. The robot (500) may be further configured to process the captured multi-sensor data in real time using onboard processors, such as GPUs or VPUs. The data may be analyzed using machine learning algorithms that are pre-trained on curated datasets to ensure accurate detection of anomalies, thereby enabling advanced and autonomous inspection capabilities.

The railway track may serve as the primary platform for the inspection activities of the AMR (500). The body structure (400) may include two parallel rails supported by sleepers, which may be configured to maintain the alignment, gauge, and stability of the track. During its operation, the AMR (500) may leverage its rear rail wheel (512) and front rail wheel (514), drivetrain motor assembly (508), and chassis (518) for stable guided motion while simultaneously employing its sensors for inspection. The AMR (500) may evaluate critical aspects of the railway track, including alignment, tilt, and surface condition, while also scanning for defects such as corrosion, cracks, and other structural damage. By combining high-precision data collection (via sensors), real-time processing (via onboard electronics), and robust mobility (via drivetrain motor assembly (508) and the rear rail wheel (512) and front rail wheel (514)), the AMR (500) ensures a comprehensive inspection and continuous monitoring of the railway health.

The present disclosure further addresses the inefficiencies and limitations of conventional automated railway inspection systems, particularly in the context of managing large volumes of sensor data obtained from LiDAR sensors, RGB/RGBD cameras, and laser-based imaging systems. Traditional systems often fail to efficiently process such data, leading to resource overutilization, service degradation, and inspection delays, as they lack mechanisms to dynamically allocate resources based on workload. The disclosed body structure (400) overcomes these challenges by enabling real-time monitoring and analysis of both track geometry and surface conditions. Unlike traditional systems that rely heavily on manual intervention, the AMR (500) autonomously leverages its integrated sensor suite, mounted on the sensor mount frame, along with its drivetrain motor assembly (508) and rear rail wheel (512) and front rail wheel (514) for guided navigation. This allows continuous capture of precise data on track gauge, cross-level, curvature, and surface defects such as corrugations, squats, skid spots, and indentations.

The robot (500) may process this data onboard using machine learning models, enabling immediate detection of anomalies without human involvement. Through these advanced capabilities, the body structure (400) delivers a scalable, efficient, and reliable solution for automated railway track inspection. It enables predictive maintenance, enhances safety, minimizes operational disruptions, and provides a crucial tool for modernizing railway infrastructure management while improving the overall operational efficiency of railways.

Now referring to FIG. 6, a flexible AMR (600) structure for autonomous inspection of elongated infrastructure elements is illustrated, in accordance with an embodiment of the present subject matter. The term "flexible" refers to the capability of the AMR (600) to adapt its wheel gauge via actuation of A-arms (612), thereby enabling operation across narrow gauge, meter gauge, standard gauge, broad gauge, and other intermediate configurations of railway tracks. As illustrated in FIG. 6, the flexible AMR (600) comprises suspension system (602), one or more cameras (604), a gauge adjusting mechanism (608), chassis (610), a drivetrain system and A-arm (612), one or more laser sensors (614, 620), a side indication light (616), a pickup handle (618), a wheel hub (622), an emergency switch (624), one or more electronics section (626), a battery section (628), a beacon light (630), and a 3D lidar sensor (632).

The suspension system (602) may comprise independent spring-damper units, elastomeric isolators, and/or active damping elements mounted between the chassis (610) and the wheel assemblies. The suspension system may maintain continuous wheel-rail contact over irregular sleepers and rail joints, isolate high-frequency vibrations from sensitive sensors (e.g., laser sensor (614, 620) and 3D LiDAR sensor (632)), and cooperate with the A-arm (612) to control wheel vertical travel and camber. In embodiments, the suspension may include position or load sensors to provide closed-loop feedback to the mobility controller for improved stability during inspection and while gauge adjustments are made.

The one or more cameras (604) may include high-resolution RGB cameras and/or RGB-D cameras mounted on the forward, lateral and/or downward facing portions of the upper body. These cameras may be used for visual defect detection (cracks, corrosion, surface anomalies), contextual imaging (sleepers, fasteners), marker recognition (reference markers, signs), and low-light imaging assisted by active illumination. The one or more cameras (604) may operate synchronously with LiDAR and profilometry sensors and feed frames into onboard image-processing pipelines and pretrained machine-learning models for real-time classification and localization of visual anomalies.

The gauge adjusting mechanism (608) is the core of "flexibility." In various embodiments this mechanism may use telescopic axles, linear actuators, or motorized sliding rails to vary the lateral spacing between opposing wheelsets. In one embodiment, the A-arms (612) being actuated manually through a manual intervention by an operator or a technician. In another embodiment, the one or more actuators are actuated automatically by a control or processing unit. The gauge adjusting mechanism (608) may include actuators (e.g., servomotors, stepper motors, or linear actuators) with position encoders, mechanical locking elements (pins, clamps, or ratchets) to rigidly secure a selected gauge, and redundant sensors (absolute encoders or limit switches) to verify position. In another embodiments, the gauge changes may be initiated manually or automatically (e.g., via operator command or automatic gauge-detection algorithm). In another embodiments, the gauge adjustment may be performed while the AMR (600) is stationary or under tightly controlled low-speed conditions to avoid destabilization, and the control system may only permit traversal after successful mechanical lock confirmation. In another embodiments, the gauge adjusting mechanism may be controlled by a gauge-control submodule in the one or more electronics section (626) and its operation is cross-referenced to the mobility actuators.

In one embodiment, the chassis (610) may provide the structural backbone of the AMR (600). In one embodiment, the chassis (610) may be fabricated from lightweight, rigid materials and include dedicated mounting interfaces for the sensor mount frame, the electronics section (626), the battery section (628), and drivetrain. In one embodiment, the chassis design may incorporate localized vibration isolation points for sensor modules, and structural reinforcement around gauge adjustment attachment points to withstand mechanical loads during actuation and operation.

In one embodiment, the drivetrain system may include one or more electric drive motors coupled to the wheel hub (622) via gear reductions and motor controllers. The A-arm is a suspension link that connects the chassis (610) to the wheel hub (622), allowing controlled vertical motion and maintaining wheel geometry (camber and toe) under load. In one embodiment, the drivetrain and A-arm (612) together provide traction, steering (as required), and controlled braking; motor controllers interface with the navigation system to produce smooth, measured movement along the track and to coordinate actions during gauge adjustment sequences.

In one embodiment, the laser sensor (614) may be used for planar scanning applications such as immediate obstacle detection, profile cross-section sampling, rapid cross-level checks, and proximity sensing for safe operation near trackside structures. In one embodiment, the laser sensor (614) may run at a high rotation rate to provide fast, low-latency scans used for motion control and collision avoidance, and its outputs are fused with camera and odometry data for reactive navigation.

In one embodiment, the side indication light (616) may provide visible status and safety signalling to trackside personnel. In another embodiment, the side indication light (616) may indicate operational states (idle, traversing, error) through steady and flashing patterns and may meet applicable illumination and color standards for railway maintenance equipment. In another embodiment, the side indication light (616) may also improve human-robot situational awareness during manual handling and stationing.

In one embodiment, the pickup handle (618) is an ergonomically positioned structural feature enabling manual lifting, placement, or transport of the AMR (600). In one embodiments the pickup handle (618) may include mechanical interlocks (to prevent actuation when engaged) or sensor switches that detect handle engagement and trigger safe shutdown or inhibit autonomous motion during transportation.

In one embodiment, the laser sensor (620) may be a high-resolution laser profilometer or triangulation sensor configured to capture cross-sectional profiles of the rail head and flange. In one embodiment, the laser sensor (620) may enable precise measurement of rail wear, head height, flange dimensions, and identification of weld-related anomalies. In another embodiment, the data from the laser sensor (620) is typically sampled at high frequency and combined with wheel-torque/odometry and point clouds to build centimeter/millimeter-level profile maps of the rails.

In one embodiment, the wheel hub (622) assembly may house bearing elements, wheel mounting features, encoders for rotational position (odometry), and interfaces to the gauge adjusting mechanism (608). In another embodiment, the wheel hub (622) may also support integrated braking elements or torque sensors to measure traction forces. In another embodiment, the quick-release or modular hub designs may facilitate maintenance and wheel replacement across operational environments.

In one embodiment, the emergency switch (624) is a prominently located, readily accessible kill switch that, when activated, immediately removes drive power, applies safe braking and places the AMR (600) in a predefined safe state while continuing to log the event. In one embodiment, the emergency switch (624) may be electrically redundant and linked to failsafe circuitry to ensure actuation under fault conditions; recovery from an emergency stop may require explicit operator action and system checks.

In one embodiment, the one or more electronics sections (626) may house the signal processing and control hardware including central compute units (CPUs, GPU/VPUs, or FPGAs), sensor interfaces, motor controllers, communication modules, onboard storage, power distribution units, and the gauge-control controller. This section may be thermally managed, vibration isolated, and sealed to meet IP and EMI requirements. In another embodiment, the one or more electronics sections (626) may execute sensor fusion, machine-learning inference, drivetrain control, and safety monitoring tasks in real time.

In one embodiment, the battery section (628) may contain the energy storage system together with a battery management system (BMS) to monitor cell voltages, temperatures, charge state, and to perform safety functions. In another embodiment, the battery section (628) may be hot-swappable in some embodiments to minimize downtime, and the power system may provide regulated voltages to the electronics section (626), drive controllers, and sensors.

In one embodiment, the beacon light (630) may serve as a high-visibility status indicator for the AMR (600), particularly during traversal or when moving in work zones. In another embodiment, the beacon light (630) may adopt different colors/patterns to indicate motion, errors, or emergency states and may be configured to automatically activate when the AMR (600) is in transit.

In one embodiment, the 3D LiDAR sensor (632) acquires dense three-dimensional point clouds of the rail and surrounding environment. In one embodiment, the 3D LiDAR sensor (632) is utilized for detailed geometry capture (for example, cross-sectional mapping, gauge verification, curvature analysis), scene understanding, and long-range obstacle detection. In one embodiment, the point cloud data from the 3D LiDAR sensor (632) may be processed onboard to extract metrics such as gauge deviation, cross-level, and curvature irregularities, and to augment ML-based anomaly detection.

The present disclosure addresses the inefficiencies and limitations of conventional systems for automated railway track inspection, particularly in the context large volumes of sensor data collected from LiDAR sensors, high-resolution RGB/RGBD cameras, and other imaging systems. Traditional systems often struggle to efficiently manage and process vast amounts of sensor data. One significant problem is the overutilization of resources, which can result in service failure or degradation, as conventional systems lack mechanisms to monitor and adjust resource usage based on the load of target services. The system solves this problem by introducing automated railway track detection, which provides real-time monitoring and analysis of track geometry and surface conditions. Unlike traditional systems that often require manual intervention and human intervention the present disclosure leverage advanced sensor technologies such as the LiDAR, the high-resolution cameras, and the laser-based measurement systems, the system continuously captures data on track gauge, cross-level, curvature, and surface defects like corrugations, squats, skid, spots, indentation. The automated system processes this data using machine learning models or geometric algorithms, allowing for immediate detection of track anomalies without the need for manual inspection. Through these advanced capabilities, the system delivers a scalable, efficient, and reliable solution for automated railway track inspection, enabling predictive maintenance, enhancing safety, and reducing operational disruptions. It provides an essential tool for modernizing railway infrastructure management and improving the overall operational efficiency of railways.

Various embodiments of the disclosure encompass numerous advantages including methods and systems for autonomous inspection of elongated infrastructure elements. The disclosed method and system have several technical advantages, but not limited to the following:
- **Boosted Safety:** The system automates inspections to detect even the smallest defects, including track misalignments, abrasions, and fastener flaws. This ensures early issue identification, enhancing passenger safety and reducing risks associated with undetected rail damage.
- **High Precision:** The system detects track geometry deviations and surface defects with high precision accuracy. This level of precision ensures that even minor irregularities are identified and addressed before they escalate into major issues.
- **Real-Time Analysis:** Onboard GPUs and VPUs enable immediate defect detection and location- and time-tagged reporting, allowing for rapid and targeted maintenance. This real-time analysis minimizes delays and accelerates corrective measures.
- **Speed and Efficiency:** The system performs quick and efficient track monitoring without disrupting train operations. This significantly reduces downtime and improves productivity.
- **Reduced Human Error:** Automation of inspection processes overcomes limitations of manual checks, minimizing human error, and providing consistent and objective results across diverse inspection conditions.
- **Higher Efficiency:** The system's real-time analysis and predictive maintenance capabilities help minimize downtime while optimizing operations. The use of advanced analytics ensures maximum efficiency and resource utilization.
- **AI-Driven Insights:** Leveraging advanced machine learning algorithms, the system provides predictive maintenance insights. This improves the reliability of track systems and reduces maintenance costs by identifying and resolving issues proactively.
- **Comprehensive Inspection:** The system offers a single, integrated solution that inspects both track geometry (e.g., track gauge, cross-level, and curves)OHE (contact wire height, stagger, wire damage), assembly defects (fastener assembly, sleepers, slabs, pre-cast plinth) and surface defects (e.g., corrugations, squats, skid spots indentation). This comprehensive coverage ensures a holistic assessment of rail conditions.
- **Cost Reduction:** Automation reduces dependency on manual labour and minimizes the risk of human error. By identifying defects early, the system helps prevent costly repairs and prolongs the lifespan of railway infrastructure.
- **Seamless Compliance:** With automated reporting capabilities, the system ensures adherence to evolving regulatory standards. This reduces the risk of penalties and promotes consistent compliance with industry requirements.
- **Tech-Driven Insights:** By integrating AI and IoT, the system delivers smarter, data-driven insights that facilitate efficient railway management. These insights enable better decision-making and proactive maintenance strategies.
- **Scalability:** The system's modular design allows it to adapt to diverse operating environments and integrate future technological advancements seamlessly. This scalability ensures long-term flexibility and growth.
- **Scalable & Future-Proof:** The modular architecture supports easy upgrades, ensuring the system remains adaptable to future technological changes and increasing operational demands.
- **Downtime Reduction:** Real-time and offline processing capabilities combined with predictive analytics minimize operational downtime, thereby enhancing system availability and efficiency.

In summary, the technical advantages of the disclosed system address the technical problems of inaccurate detection, delayed reporting, and high dependency on manual inspection in conventional railway monitoring technologies. By integrating precision anomaly detection, automated reporting, and predictive analysis, the system mitigates derailment risks, reduces human error, minimizes downtime, and lowers maintenance costs, thereby providing a safer, more reliable, and efficient railway infrastructure management solution.

The claimed invention of a method and system for anomaly detection and reporting in elongated infrastructure elements involves tangible components, processes, and functionalities that interact to achieve specific technical outcomes. The system integrates elements such as one or more image acquisition units, defect detection units, reporting units, processors, and memory, to provide real-time defect identification, location- and time-tagged reporting, and comprehensive inspection of both track geometry, OHE, assembly (fastener assembly, sleeper, slab, pre-cast plinth) and surface conditions.

Furthermore, the invention employs a non-trivial combination of hardware and software modules that collectively provide a technical solution to a technical problem. While individual components such as processors, memory, sensors, and reporting systems are known in the art, their integration into a unified framework that enables high-precision, real-time inspection with predictive maintenance capabilities represents a significant technical advancement over conventional railway monitoring systems.

In light of the above-mentioned advantages and the technical advancements provided by the disclosed method and system, the claimed steps and system components are not routine, conventional, or well understood in the art. Rather, they provide improvements in the functioning of railway inspection systems themselves, by enabling high-accuracy anomaly detection, minimizing false negatives, and automating reporting in a manner that directly enhances safety and operational efficiency.

A person skilled in the art will appreciate that the systems, units, and sub-modules described herein are exemplary in nature and should not be considered limiting. Variants of the disclosed units, or alternatives thereof, may be employed to suit particular operational requirements without departing from the scope of the present disclosure.

While the present disclosure has been described with reference to specific embodiments, it will be understood by those skilled in the art that modifications, substitutions, or equivalents may be made without departing from the scope of the invention. Accordingly, the present disclosure should be interpreted to include all such embodiments falling within the scope of the appended claims.

## Claims

1. An autonomous inspection system (100) for elongated infrastructure elements, wherein the autonomous inspection system (100) comprises:
an autonomous mobile robot (AMR) (500, 600) configured to traverse along the elongated infrastructure elements, wherein the AMR (500, 600) comprises:
a processor (202);
a memory (204) communicatively coupled with the processor (202), wherein the memory (204) is configured to store one or more executable instructions to be executed by the processor (202), wherein the one or more executable instructions comprise one or more pretrained machine learning (ML) models, geometric and control algorithms;
one or more sensors (210), mounted on the AMR (500, 600), configured to capture at least one of geometric data, surface data, profile data, surrounding data, or a combination thereof, corresponding to the elongated infrastructure elements;
an inspection unit (212) coupled with the processor (202), configured to inspect information captured by the one or more sensors (210), to detect one or more anomalies; and
a reporting unit (214) coupled with processor (202), configured to generate a report on the one or more anomalies corresponding to the elongated infrastructure elements.

2. The system (100) as claimed in claim 1, wherein the elongated infrastructure elements comprise at least one of one or more railway track, a roadway, a pipeline, a conveyor belt, a cable line, or a combination thereof.

3. The system (100) as claimed in claim 1, wherein the one or more sensors (210) are synchronized to provide multi-modal data streams, enabling correlated anomaly detection across geometry deviation, surface defects, and overhead equipment; wherein the one or more sensors (210) comprise at least of visual imaging sensor, LiDAR sensor, range sensor, laser profiler, ultrasonic sensor, infrared sensor, thermography sensor, or a combination thereof; wherein the surrounding data corresponding to the elongated infrastructure elements, comprises at least one of visual defects in fastener assemblies, profile wear, over hanging equipment components, schedule of dimensions (SOD) infringements, and vertical vibrational analysis.

4. The system (100) as claimed in claim **1,** wherein the AMR (500, 600) comprises:
one or more protective enclosures configured to shield the one or more sensors (210) from at least one of dust, moisture, vibrations, mechanical impact, or a combination thereof;
one or more mobility mechanisms, configured to autonomously move the AMR (500, 600) along the elongated infrastructure elements, wherein the one or more mobility mechanisms comprises a plurality of wheels and one or more actuators configured to maintain stability and controlled motion of the AMR (500, 600) on the elongated infrastructure elements, wherein the one or more actuators configured to adjust the lateral spacing of the plurality of wheels, adapting the AMR (600) to different gauges of the elongated infrastructure elements;
a localization unit, integrated with the AMR (500, 600), configured to generate precise location information corresponding to the one or more anomalies, wherein the location information comprises at least one of GPS coordinates, odometry based distance measurement, integration of odometry/GPS data with digital map of rail network, network-assisted localization, onboard system clock-based time tagging, reference markers identifier near to the one or more anomalies and a chainage information; and
an integrated powerhouse configured to power the AMR (500, 600); wherein the integrated powerhouse comprises one or more batteries and one or more electric components; wherein the one or more batteries are arranged in a predefined configuration to power the AMR (500, 600).

5. The system (100) as claimed in claim 1, wherein the processor (202) comprise at least one of graphics processing unit (GPU), vision processing unit (VPU), Tensor Processing Unit (TPU) or a combination thereof; wherein the processor (202) is configured to process the information captured by the one or more sensors (210) either in real-time mode or in offline mode; wherein the real-time mode indicates processing of the information captured by the one or more sensors (210) during traversing of the AMR (500, 600) along the elongated infrastructure elements; wherein the offline mode indicates recording the information captured during the traversal of the AMR (500, 600), storing the information to the memory followed by processing the information at a later time.

6. The system (100) as claimed in claim 1, wherein the one or more pretrained ML models are trained on at least one of, the geometric data, the surface data, the profile data, the surrounding data, or a combination thereof, for detecting the one or more anomalies; wherein the one or more anomalies comprise at least one of geometric deviation, surface defect, track misalignment, profile deviations, rail wear, cracks, corrugations, squats, skid spots, indentations, crushed heads, end better, chips, visual defect in fasteners, missing fasteners, liners, plates, fastener looseness, bolting looseness, over hanging equipment anomalies, SOD infringements, or a combination thereof.

7. The system (100) as claimed in claim 1, wherein the inspection unit (212) is configured to prioritize the one or more anomalies based on severity of predictive maintenance, wherein the inspection unit (212) is configured to transmit inspection log, corresponding to the one or more sensors (210), to a remote-control unit.

8. The system (100) as claimed in claim 7, wherein the reporting unit (214) is configured to transmit the report, corresponding to the elongated infrastructure elements, to the remote-control unit; wherein the reporting unit (214) is configured to utilizes at least one of a large language model (LLM), generative adversarial network (GAN) model or a combination thereof, to generate the report; wherein the report comprises at least one of information on the one or more anomalies in the elongated infrastructure elements, classification of the one or more anomalies based on severity, location information corresponding to the one or more anomalies, predictive maintenance recommendation for the elongated infrastructure elements, or a combination thereof.

9. The system (100) as claimed in claim 7, wherein the reporting unit (214) is configured to fetch the inspection log from the remote-control unit, to generate the report on the one or more anomalies.

10. A method (300) for autonomous inspection of elongated infrastructure elements, wherein the method (300) comprises:
deploying (302) an autonomous mobile robot (AMR) (500, 600) on an elongated infrastructure element, wherein one or more sensors (210) are mounted on the AMR (500, 600);
triggering (304) autonomous traversing of the AMR (500, 600) on the elongated infrastructure elements by utilizing one or more mobility mechanisms of the AMR (500, 600), wherein the one or more mobility mechanisms comprises a plurality of wheels and one or more actuators configured to maintain stability and controlled motion of the AMR (500, 600) on the elongated infrastructure elements;
capturing (306) at least one of geometric data, surface data, profile data, surrounding data, or a combination thereof, corresponding to the elongated infrastructure elements, utilizing the one or more sensors (210) while traversing of the AMR (500, 600);
processing (308) the captured sensor data, utilizing one or more pretrained machine learning (ML) models or geometric algorithms, to detect one or more anomalies corresponding to the elongated infrastructure elements;
localizing (310) the one or more anomalies with at least one of GPS coordinates, odometry based distance measurement, integration of odometry/GPS data with digital map of rail network, network-assisted localization, onboard system clock-based time tagging, reference markers identifier near to the one or more anomalies and a chainage information; and
providing (312) a report corresponding to the one or more anomalies, wherein the report comprises at least one of information on the one or more anomalies in the elongated infrastructure elements, classification of the one or more anomalies based on severity, location information corresponding to the one or more anomalies, predictive maintenance recommendation for the elongated infrastructure elements, or a combination thereof.
